# EUROPEAN PATENT APPLICATION

(11) **EP 3 002 457 A1**
(43) Date of publication of application: **06.04.2016**
(21) Application number: 14306526.6
(22) Date of filing: 30.09.2014
(51) Int. Cl.: F03G 6/00, F01K 11/02

(54) **An energy harversting technique**

(71) Applicant: ALCATEL LUCENT, 92100 Boulogne-Billancourt (FR)
(72) Inventor: Donnelly, Brian, Dublin (IE); Stafford, Jason, Dublin (IE); Jeffers, Nicholas, Dublin (IE)
(74) Representative: Shamsaei Far, Hassan

(57) **Abstract**

An apparatus disclosed in which evaporation of a liquid inside a housing is used to cause an energy harvester to generate electricity. The energy harvester has a movable element and a fixed element. The liquid is capable of evaporating in response to receiving heat and the vapor generated is used to move the movable element as it moves. The fixed element is configured to generate electric energy in response to the movement of the movable element.

## Description

### TECHNICAL FIELD

The present disclosure is directed, in general, to a technique for harvesting energy.

### BACKGROUND

Powering electric or electronic devices in remote locations often poses important challenges. For example if the power is provided using batteries, there will be a need for replacing or recharging the battery when it is discharged. Providing power using grid electricity requires costly installation of cables and intermediate components such as transformers to bring the power from a hub to the location where the power is needed. One example of electronic devices typically used in remote locations is a wireless sensor. These sensors typically detect, monitor or measure an event, e.g. a movement or vibration, an electric or magnetic excitation, temperature status or other physical phenomena. The detected, monitored or measured event is typically transmitted wirelessly through networks in the form of data back to a hub where the data can be analyzed. To avoid the use of batteries or power from the grid, some wireless sensors are typically supplied by energy scavenging/harvesting devices such as thermoelectric generators, or solar cells.

### SUMMARY

Some embodiments feature an apparatus comprising:
- a housing;
- a liquid hermetically enclosed inside the housing and configured to evaporate in response to receiving heat; and
- an energy harvester having a movable element and a fixed element; wherein
at least the movable element is enclosed inside the housing and is configured to move in response to a mechanical effect of a vapor generated from evaporation of the liquid; and
the fixed element is configured to generate electric energy in response to the movement of the movable element.

According to some specific embodiments:
- the moving element comprises a turbine having an axis of rotation and a plurality of blades extending radially from the axis;
- the fixed element is an alternator, and
the apparatus is configured to induce electric energy in the alternator in response to a rotation of the turbine around the axis of rotation.

According to some specific embodiments:
- the moving element comprises a rotor having an axis of rotation and a plurality of blades extending radially from the axis;
the fixed element comprises an electromagnetic coil, and the apparatus is configured to induce electric energy in the electromagnetic coil in response to a rotation of the rotor around the axis of rotation.

According to some specific embodiments:
the electromagnetic coil is located on an outer surface of the housing.

According to some specific embodiments:
- the moving element comprises a planar body; and
- the fixed element comprises a piezoelectric element,
at least one end of the planar body being attached to the piezoelectric element and an opposite end of the planar body being movable; wherein
a plane defined by the planar body is parallel to a plane defined by a direction of movement of the vapor.

According to some specific embodiments:
the housing is made of thermally conductive material

According to some specific embodiments:
the housing comprises an evaporator section configured to receive heat from a heat source and transfer such heat to the liquid thereby causing the liquid to evaporate; and a condenser section configured to receive the vapor and transfer the heat to the outer environment of the housing thereby condensing the vapor into liquid.

According to some specific embodiments:
the evaporator section and the condenser section of the housing are made of thermally conductive material.

Some embodiments feature a heat sink comprising:
- a housing;
- a liquid hermetically enclosed inside the housing and configured to evaporate in response to receiving heat; and
- an energy harvester having a movable element and a fixed element; wherein
at least the movable element is enclosed inside the housing and is configured to move in response to a mechanical effect of a vapor generated from evaporation of the liquid; and
the fixed element is configured to generate electric energy in response to the movement of the movable element.

Some embodiments feature an apparatus comprising a heat sink and a component operable using electricity, the heat sink comprising:
- a housing;
- a liquid hermetically enclosed inside the housing and configured to evaporate in response to receiving heat; and
- an energy harvester having a movable element and a fixed element; wherein
at least the movable element is enclosed inside the housing and is configured to move in response to a mechanical effect of a vapor generated from evaporation of the liquid; and
the fixed element is configured to generate electric energy in response to the movement of the movable element.

According to some specific embodiments, the component operable using electricity is configured to measure physical parameters associated to an oil pipeline.

According to some specific embodiments the physical parameters comprise temperature or pressure.

According to some specific embodiments, the component operable using electricity is comprised in a telecommunications equipment.

### BRIEF DESCRIPTION OF THE DRAWINGS

For a more complete understanding of the present disclosure, reference is now made to the following descriptions taken in conjunction with the accompanying drawings, in which:
FIG. 1 is an exemplary schematic cross-sectional representation of a known heat pipe.
FIG. 2 is an exemplary schematic cross-sectional representation of a heat pipe according to some embodiments of the disclosure.
FIG. 3 is an expanded view of an energy harvester used in the heat pipe of FIG. 2.
FIG. 4 is an exemplary schematic cross-sectional representation of a heat pipe according to some embodiments of the disclosure.
FIGs. 5A and 5B are exemplary representations of an energy harvester comprising a blade and a piezoelectric element in different orientations with respect to the movement of a vapor.

### DETAILED DESCRIPTION

It is desired to provide a solution toward harvesting energy in remote locations to power electric or electronic components. The present disclosure proposes an energy harvester in which use is made of phase changes occurring during operation inside a heat pipe as will be described in further detail below.

One example in which electric or electronic components are used remotely is the case of over-ground oil pipelines which can extend over distances of hundreds of miles. These pipelines are usually monitored for temperature and pressure using wireless sensor devices.

Oil pipelines are, in some cases, built on permafrost. The heat generated by the friction between the oil and pipe (and within the flow itself) typically results in high temperatures that can melt the permafrost. This is undesirable because the melting of the permafrost may deform the ground upon which pipeline support structures are mounted thereby causing the pipeline to sink. In order to avoid the transfer of heat from the pipeline to the permafrost, heat pipes are often used to dissipate this heat to the environment (e.g. surrounding air) before it conducts to the ground.

In another scenario, telecommunications equipment may be deployed in remote areas that rely on off grid electricity generation. Currently the power for such equipment is typically provided by solar panels attached to battery banks. However, solar panels require regular maintenance in order to keep the panel clear of dust and debris. In certain occasions, such remotely installed equipment may be in proximity to a source of heat in the environment. For example the source of heat may be solar radiation, heat in the air, heat in the underground soil, and the like. A heat pipe may be used to take advantage of the presence of such heat in order to generate electrical energy as will be described further below.

The present disclosure takes advantage of the operation of the heat pipes to supply power to the wireless sensors, or other electric or electronic components.

Heat pipes are known to be effective devices for transporting heat from a heat source to a heat sink. Heat pipes are typically hollow tubes that contain some amount of working liquid (herein also referred to as liquid) and no gases inside.

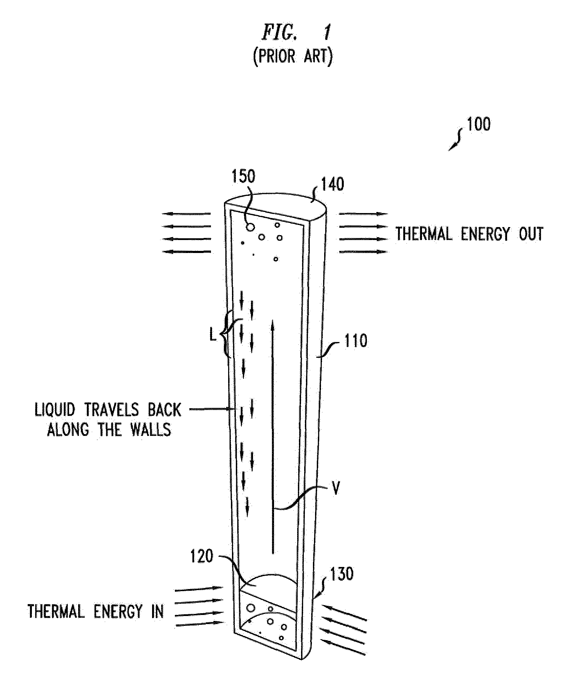

Referring first to Fig. 1, a brief description of a known heat pipe as typically used in remote cooling applications, such as in oil pipelines, is provided. The heat pipe 100 of FIG. 1 comprises a housing 110 and a liquid 120, the liquid being hermetically enclosed inside the housing. Heat is input at one end of the heat pipe 130 (herein also called evaporator) where the liquid is stored. The input energy converts the liquid 120 within the evaporator 130 into vapor. This vapor travels to the other end of the pipe 140 (herein called the condenser) where heat is removed from the vapor and the vapor condenses back to liquid. The movement of the vapor from the evaporator 130 to the condenser 140 is shown in FIG. 1 by arrow V and the liquid resulting from condensation is represented by reference numeral 150.

The liquid 150 settles on the inner walls of the condenser and returns either by gravity or capillary action to the evaporator 130. The movement of the liquid from the condenser back to the evaporator is shown in FIG. 1 by arrows L. The evaporating and condensing actions are repeated in a cyclic manner thereby contributing to removing heat from the heat source.

When a liquid is converted into a vapor there is a significant change in volume. In a heat pipe, the resulting volume change results in vapor traveling to the condenser end of the heat pipe at a velocity which is substantially higher than the velocity of the liquid in the opposite direction, affording the vapor a certain amount of force in its movement.

The present disclosure relates to harvesting the kinetic energy associated to the movement of the vapor, converting this energy to electricity and outputting the latter to be used as a power source. The power source can be used to supply electronics directly or to charge a battery bank.

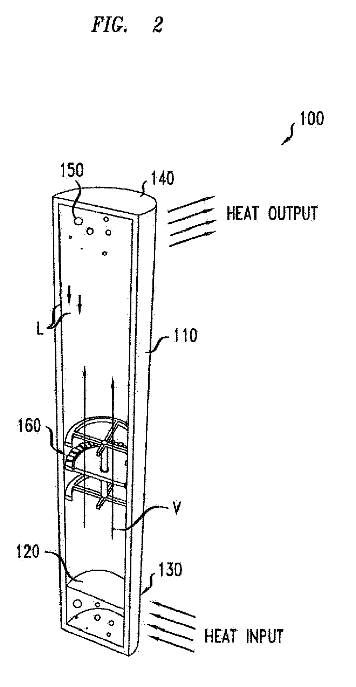

FIG. 2 is a schematic representation of a heat pipe according to embodiments of the disclosure. In FIG. 2, like elements have been provided with like reference numerals as those of FIG. 1.

The heat pipe of FIG. 2 comprises a housing 110 and a working liquid 120 (herein also referred to as liquid). The housing 110 is shown to have the shape of an elongated cylinder with a circular cross-section. However other shapes and cross-sections, such as for example an oval or square or rectangular shape cross-sections may likewise be used. The outer surface of the heat pipe may comprise fins (not shown) to assist the transfer of heat to the surrounding environment. The housing 110 is preferably made of a material having thermal conductivity which is chosen with due regard to the type of liquid 120 used inside. Some known examples of housing material and corresponding liquid are copper with water or aluminum with acetone. However, other materials may also be used depending on each specific application.

In some embodiments only the evaporator and the condenser sections are made of a material with preferably high thermal conductivity to ensure efficient heat transfer. The rest of the housing may be made of any suitable material.

Within the context of the present disclosure, any material having a thermal conductivity equal or greater than about 1W/mK (Watts per Meter Kelvin) may be considered as a thermally conductive material, and any material having a thermal conductivity equal or greater than about 10W/mK may be considered to have good thermal conductivity.

Although the heat pipe of FIG. 2 is shown in a vertical position, the disclosure is not so limited as the heat pipe 100 may be configured to operate using gravity, for example the heat pipe may be vertically positioned, or using capillary action, which would allow any suitable orientation for the heat pipe, or a combination thereof.

The evaporation and condensation operation of the heat pipe 100 of the present discourse is similar to that of the known heat pipe of FIG. 1.

However, the heat pipe of FIG. 2 further comprises an energy harvester device 160. The energy harvester 160 is built into heat pipe 100 and is configured to convert the kinetic energy associated to the movement of the vapor to electricity.

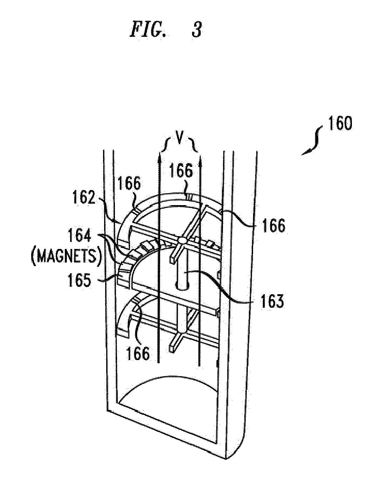

FIG. 3 illustrates an example of the energy harvester of FIG. 2 in further detail. The energy harvester 160 of FIG. 3 comprises a turbine 161, preferably of small size, and an alternator 162.

Turbines are widely known as devices that convert kinetic energy associated to the movement of a fluid (gas or liquid) into work. The exemplary turbine of FIG. 3 has at least one moving element, usually called a rotor compromising an axis of rotation often in the form of a shaft 163 and a plurality of blades 165 (or vanes) extending radially from the shaft 163. The blades are positioned in such a manner that when a vapor moves in a direction V along the shaft 163, it impacts on the blades and imparts a force on the blades causing them to rotate the shaft 163.

Likewise, alternators are known. The exemplary alternator 162 of FIG. 3 comprises one or more magnets 164 and one or more electric conductors 166 that can move relative to each other. This relative movement, typically rotational, produces a change in the magnetic field of the magnets 164 and this in turn induces a current in the conductors 166 which can be used for the supply of power to other components.

In the example of FIG. 3, permanent magnets 164 may be located on one or more blades 165 of the turbine 161 and electric conductors 166 may be located in relative proximity to the blades, as shown. As the vapor generated at the heated evaporator section 130 travels through the turbine 161, as shown by arrow V, it causes the turbine 161 to rotate. The rotation of the turbine 161 relative to the conductors 166 of the alternator 162 generates electricity. As a magnet 164 rotates relative to a conductor 166 its opposite poles first move close and then away from the conductor thereby inducing an alternating electricity (voltage or current).

The electricity supply can be fed out of the heat sink in any suitable manner, for example through a sealed end of the heat pipe or directly through the body thereof. This has not been illustrated in FIG. 3.

In some embodiments, the magnets 164 may be positioned on respective arms (not shown) that extend from the shaft 163, the arms being distinct from the blades 165. Here again the magnets 164 may be positioned in close proximity to the alternator's electric conductors 166 to ensure proper induction of electric energy. As the shaft 163 rotates in response to the impact of the vapor on the blades, the arms carrying the magnets 164 also move at the same rotational speed, thereby inducing electricity in the coils.

In some embodiments, the energy harvester 160 may comprise a magnet-coil pair. Similar to the embodiment of FIG. 3 using a turbine and an alternator, in the present example embodiment at least some of the blades of the rotor may have permanent magnets mounted thereon. However, differently from the previous example, in the present embodiment one or more electromagnetic coils may be installed on the outer surface of the heat pipe within certain proximity to the location of the rotor so as to receive the magnetic field of the magnets as they rotate inside the heat pipe and thereby generate electricity by induction. In operation, the vapor generated at the heated evaporator section 130 travels through the rotor causing the rotor to rotate. The rotation of the rotor causes the magnets to move relative to the coil(s) thereby inducing an electromagnetic force in the coil(s) causing the latter to generate electricity.

This embodiment has the additional advantage of eliminating the need for extending wires from the inside to the outside of the heat pipe and the sealing around the wires.

In some embodiments, use may be made of a device comprising an element of piezoelectric material attached to an end of a cantilever blade. The cantilever blade may be a planar body capable of moving in response to a mechanical impact on its surface. In the proposed configuration, the cantilever blade may be attached at one end to the piezoelectric element and have another free and moveable end. The cantilever blade may further be configured to exhibit sufficient flexibility to undergo displacement at the free end thereof in response to the movement of the vapor as will be described further below. The displacement at the free end of the cantilever blade is transferred to the piezoelectric material in the form of mechanical disturbance causing the latter to generate electricity.

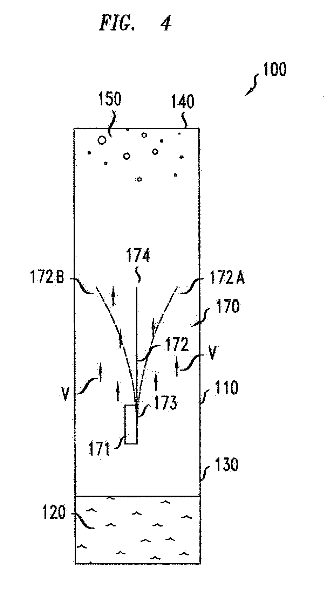

One exemplary embodiment of an energy harvester using piezoelectric element and cantilever blade combination is shown in FIG. 4 which illustrates a front view in cross-section of a heat pipe according to some embodiments. In FIG. 4, unless otherwise indicated, like elements have been provided with like reference numerals with FIGs. 1, 2 and 3.

The principle of evaporation and condensation operations of the heat sink 100 of FIG. 4 is similar to that of FIGs. 1, 2 or 3.

However, the energy harvester 170 of the heat pipe 100 of FIG. 4 comprises a piezoelectric element and a planar body 172 (herein also referred to as cantilever blade) which is attached to the piezoelectric element 171 at an end 173 thereof. An opposite end 174 of the cantilever blade 172 is free and moveable. As can be appreciated in FIG. 4, the cantilever blade 172 defines a plane that extends perpendicularly out of the plane of the page.

As the liquid 120 evaporates upon absorption of heat from an external heat source (not shown), the vapor moves from the evaporator 13a to the condenser 140.

As shown in FIG. 4, the planar cantilever blade 172 is placed such that it is in a plane which is parallel to the direction of the flow of the vapor as shown by arrows V.

The movement of the vapor as it flows in a plane parallel to the plane of the cantilever blade 172 causes the cantilever blade 172 to flutter, thereby oscillating its free end 174. The oscillation of the free end 174 of the cantilever blade 712 is represented in FIG. 4 by broken lines 172a and 712b.

The oscillation of the free end of the cantilever blade is then transferred to the piezoelectric element which gives rise to the generation of electric energy as described above.

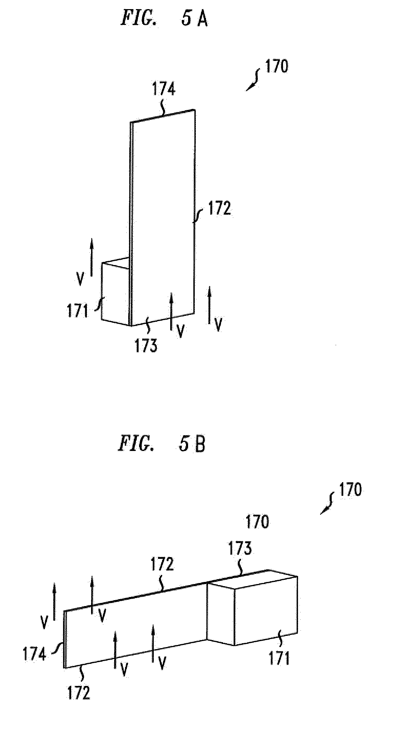

In FIG. 4, the cantilever blade is shown to have its attached end 173 upstream its free end 174 with respect to the direction of flow of the vapor as shown by arrows V. However, this is only exemplary and other orientations of the cantilever blade 172 may also be envisaged within the scope of the present disclosure as long as all such orientations fulfill the condition that the plane of the cantilever blade 172 is in parallel with the direction V of the flow of the vapor. FIGs. 5A and 5B represent two examples of such orientations.

FIG. 5A represents an orientation of the cantilever blade 172 in which the attached end 173 is upstream its free end 174 with respect to the direction of flow of the vapor as shown by arrows V, which is the same situation as described with reference to FIG. 4.

FIG. 5B represents an orientation of the cantilever blade 172 in which the attached end 173 and its free end 174 are substantially at the same level with respect to the direction of flow of the vapor as shown by arrows V. In this arrangement also, the flow of the vapor causes the free end of the cantilever blade to flutter in a similar fashion as described with reference to FIG. 4.

One advantage of the energy harvester disclosed herein is that the output power generated can be used for a variety of purposes. For example the generated electricity may be used to power other parts or components of the thermal management mechanism such as fan on the heat sink.

Some known energy harvesting solutions include vibration energy harvesters and thermoelectric generators which typically generate low power and therefore require energy storage devices like batteries or require very high temperatures to operate efficiently (e.g. the exhaust of gas turbines). The present solution, in contrast, provides two useful functions compared to other existing solutions; the two functions being removal of thermal energy and generation of electricity from waste heat.

## Claims

1. An apparatus comprising:
- a housing;
- a liquid hermetically enclosed inside the housing and configured to evaporate in response to receiving heat; and
- an energy harvester having a movable element and a fixed element; wherein
at least the movable element is enclosed inside the housing and is configured to move in response to a mechanical effect of a vapor generated from evaporation of the liquid; and
the fixed element is configured to generate electric energy in response to the movement of the movable element.

2. The apparatus of claim 1, wherein:
- the moving element comprises a turbine having an axis of rotation and a plurality of blades extending radially from the axis; and
- the fixed element is an alternator, I
the apparatus being configured to induce electric energy in the alternator in response to a rotation of the turbine around the axis of rotation.

3. The apparatus of claim 1, wherein:
- the moving element comprises a rotor having an axis of rotation and a plurality of blades extending radially from the axis; and
- the fixed element comprises an electromagnetic coil, the apparatus being configured to induce electric energy in the in the electromagnetic coil in response to a rotation of the rotor around the axis of rotation.

4. The apparatus of claim 3, wherein the electromagnetic coil is located on an outer surface of the housing.

5. The apparatus of claim 1, wherein:
- the moving element comprises a planar body; and
- the fixed element comprises a piezoelectric element, at least one end of the planar body being attached to the piezoelectric element and an opposite end of the planar body being movable; wherein
a plane defined by the planar body is parallel to a plane defined by a direction of movement of the vapor.

6. The apparatus of claim 1, wherein the housing is made of thermally conductive material

7. The apparatus of claim 1, wherein the housing comprises an evaporator section configured to receive heat from a heat source and transfer such heat to the liquid thereby causing the liquid to evaporate; and a condenser section configured to receive the vapor and transfer the heat to the outer environment of the housing thereby condensing the vapor into liquid.

8. The apparatus of claim 7, wherein the evaporator section and the condenser section of the housing are made of thermally conductive material.

9. A heat sink comprising:
- a housing;
- a liquid hermetically enclosed inside the housing and configured to evaporate in response to receiving heat; and
- an energy harvester having a movable element and a fixed element; wherein
at least the movable element is enclosed inside the housing and is configured to move in response to a mechanical effect of a vapor generated from evaporation of the liquid; and
the fixed element is configured to generate electric energy in response to the movement of the movable element.

10. An apparatus comprising a heat sink and a component operable using electricity, the heat sink comprising:
- a housing;
- a liquid hermetically enclosed inside the housing and configured to evaporate in response to receiving heat; and
- an energy harvester having a movable element and a fixed element; wherein
at least the movable element is enclosed inside the housing and is configured to move in response to a mechanical effect of a vapor generated from evaporation of the liquid; and
the fixed element is configured to generate electric energy in response to the movement of the movable element.

11. The apparatus of claim 10, wherein the component operable using electricity is configured to measure physical parameters associated to an oil pipeline.

12. The apparatus of claim 11, wherein the physical parameters comprise temperature or pressure.

13. The apparatus of claim 10, wherein the component operable using electricity is comprised in a telecommunications equipment.
